# EUROPEAN PATENT SPECIFICATION

(11) **EP 4 086 117 B1**
(45) Date of publication and mention of the grant of the patent: **29.11.2023**
(21) Application number: 21172036.2
(22) Date of filing: 04.05.2021
(51) Int. Cl.: B60R 3/02, B62D 33/03

(54) **PLATFORM DROPSIDE WITH AN INTEGRATED FOOTSTEP**
KLAPPBARE SEITENWAND FÜR EINE LADEFLÄCHE MIT INTEGRIERTER TRITTSTUFE
RIDELLE BASCULANTE POUR PLATEFORME AVEC MARCHEPIED INTÉGRÉ

(43) Date of publication of application: 09.11.2022
(73) Proprietor: Axel Johnson International AB, 113 46 Stockholm (SE)
(72) Inventor: Andersson, Ragnvald, 467 94 GRÄSTORP (SE)
(74) Representative: Lind Edlund Kenamets Intellectual Property AB

(56) References cited:
- EP-B1- 0 315 614
- US-A- 5 195 609

## Description

### Technical field

The inventive concept described herein generally relates to aiding devices for mounting, more specifically it relates to a footstep arrangement.

### Background

Platform bodies are typically used on vehicles, such as flatbed trucks, for transporting cargo. The platform on which cargo are transported are often enclosed by a platform sidewall to delimit a platform area and alleviate the risk of cargo falling from the platform. The sidewalls may contain platform dropsides that may be opened to facilitate access to the cargo. The platform is typically allocated at an elevated height that complicates the accessibility to the cargo which may be alleviated by lowering the platform or using a ladder to facilitate mounting the platform and access the cargo. This often involves complicated hydraulics and/or the need to transport space consuming ladder(s) along with the transported cargo.

Another solution, disclosed e.g. by US 5,820,193, is a footstep attached to the inside surface of the closed platform dropside. When the dropside is opened the footstep with pivot so as to extend below the dropside. A drawback with this type of footstep arrangement is that it may extend into the cargo space, and potentially damage transported goods. Another drawback is that the platform dropside will be subject to a rotational force when the footstep supports a person's weight. This force may cause the footstep arrangement to pivot about the pivoting axis which may complicate accessing and/or mounting the transport platform.

A better approach is disclosed in EP0315614A1 where a pivotable footstep is arranged on the side of the dropside, and can be folded out into a step-forming position. However, such a pivotable pin may be difficult to retrofit into an existing platform dropside.

### Summary of the invention

It is an object of the present inventive concept to mitigate, alleviate or eliminate one or more of the above-identified deficiencies in the art and disadvantages singly or in combination.

According to a first aspect of the inventive concept, these and other objects are achieved in full, or at least in part, by a loading platform dropside having the features of claim 1.

The present invention is based on the understanding that a facilitated access to a cargo platform may be achieved when the footstep arrangement is arranged in a platform dropside of a cargo platform. By the elongated footstep member being slidably received by the footstep receiving member and by having a sufficient portion of the elongated footstep member remaining within the footstep receiving member a rotationally stable footstep with respect to the footstep receiving member may be provided. The footstep may withstand rotational action of the footstep arrangement caused by for example a force transverse to the extension of the elongated footstep applied to an extracted portion of the elongated footstep member, hereby referred to as the footstep. By the elongated footstep member being slidable within the footstep receiving member may also provide a facilitated access to and/or extraction of a footstep.

By "sufficient" portion of the footstep member is intended a portion which ensures that any rotational force caused by a person standing ont eh footstep can be counteracted by the receiving member (and the dropside in which it is mounted) without damaging or deforming the footstep arrangement (or the dropside).

This may typically be at least 20%, preferably at least 30%, more preferably at least 40% and most preferably at least 50% of the elongated footstep member remaining in the footstep receiving member when the elongated footstep member is arranged in the extracted position. By rotationally stable it should here be understood as rotationally stable about any axis transverse to the extension of the elongated footstep member.

The elongated footstep member may comprise a protrusion configured to abut against the footstep receiving member in at least one of the extracted position and the retracted position.

The receiving member my further comprise an elongated mating portion for receiving the protrusion, and this mating portion may comprise a first end portion for defining the retracted position and a second end portion for defining the extracted position. The end portions of the mating portion will thus define the extracted position and the retracted position, and thus also the portion of the footstep which remains in the receiving member in the extracted position.

The footstep receiving member may comprise a first biasing member for engaging with the protrusion when the elongated footstep member is arranged in the retracted position. The footstep receiving member may further comprise a second biasing member for engaging with the protrusion when the elongated footstep member is arranged in the extracted position. Due to the first and/or second biasing member engaging with the protrusion the elongated footstep member may snap into position and further sliding of the elongated footstep member may require an applied force parallel to the extension of the elongated footstep for disengaging the first and/or second biasing member from the protrusion. This may provide a facilitated positioning of the elongated footstep member in the retracted and extracted position, respectively. This may further prevent undesirable sliding of the elongated footstep member in the footstep receiving member due to external forces, such as gravity (when for example tiling the footstep arrangement) or vibrations that may act on the footstep arrangement.

The material of the elongated footstep member may be different than that of the footstep receiving member. The elongated footstep member may be made of metal and the footstep receiving member may be made of a plastic material. This may provide a durable footstep arrangement while minimizing unwanted clanking sound from interaction between the elongated footstep member and the footstep receiving member.

The elongated footstep member may have any cross-sectional shape, such as rectangular or circular.

The elongated footstep member may comprise a plurality of groves. The grooves may be arranged on at least one side along the extension of the elongated footstep member, preferably the side of the elongated footstep member configured to form the footstep when the elongated footstep member is arranged in the extracted position. Further, the grooved may preferably be arranged on at least the footstep of the elongated footstep member. The grooves may improve the friction when stepping on (the footstep of) the elongated footstep member.

The footstep receiving member may comprise an opening through which the elongated footstep member may slide and at which the elongated footstep member may be reached when the elongated footstep member is arranged in the retracted position. The elongated footstep member may comprise a recess arranged adjacent to the opening when the elongated footstep member is arranged in the retracted position. The recess may be formed into a gripping portion. The recess may facilitate access to and/or extraction of the elongated footstep member when it is in the retracted position.

The platform dropside may be configured to pivot around an axis A extending in the lengthwise direction and wherein the footstep arrangement may be arranged in the opposite end of the platform dropside with respect to the axis A.

It should be understood that the footstep arrangement may be arranged at any distance from the axis A along the platform dropside and the distance may be adapted to the height of the dropside with respect to the distance between the platform and the ground on the loading platform of which the platform dropside is configured to form part of.

As the footstep arrangement is arranged within the platform dropside and the elongated footstep member extends in a lengthwise direction, the platform dropside will not be subject to limited torque forcing the platform dropside to pivot when a user steps on the footstep member. This is advantageous as having a footstep arranged transverse to the lengthwise direction could otherwise affect the platform dropside to pivot, i.e. swing, and complicate accessing and/or mounting the platform.

Other objectives, features and advantages of the present inventive concept will appear from the following detailed disclosure, from the attached claims as well as from the drawings.

Generally, all terms used in the claims are to be interpreted according to their ordinary meaning in the technical field, unless explicitly defined otherwise herein. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of the element, device, component, means, step, etc., unless explicitly stated otherwise.

### Brief description of the drawings

The above, as well as additional objects, features and advantages of the present inventive concept, will be better understood through the following illustrative and non-limiting detailed description of different embodiments of the present inventive concept, with reference to the appended drawings, wherein:
Fig. 1 schematically illustrates a perspective view of vehicle for transporting cargo comprising a platform dropside with footstep arrangement attached according to at least one embodiment.
Figs. 2a and 2b schematically illustrate perspective views of a footstep arrangement according to at least one embodiment.
Fig. 3a and 3b schematically illustrates a perspective view of the footstep arrangement and a loading platform dropside before and after assembly, respectively according to at least one embodiment.
Fig. 4 schematically illustrates a perspective view of the footstep arrangement according to at least one embodiment.

The figures are not necessarily to scale, and generally only show parts that are necessary in order to elucidate the inventive concept, wherein other parts may be omitted or merely suggested.

### Detailed description

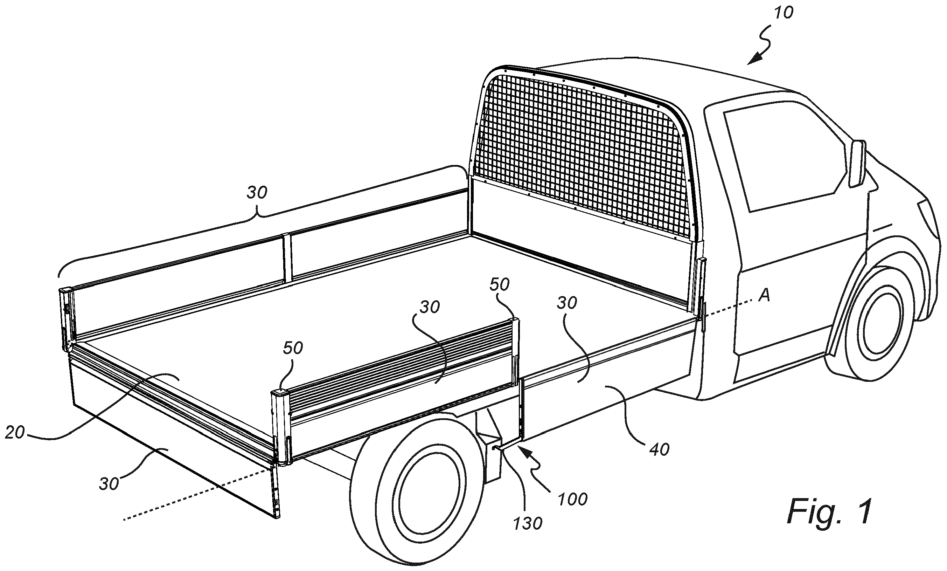

Fig. 1 illustrates a vehicle 10 for transporting cargo comprising a loading platform 20 enclosed with loading platform sidewalls 30. The loading platform sidewalls 30 comprise at least one loading platform dropside 40 forming part of the loading platform sidewall 30. The dropside 40 has a closed state in which it delimits the loading platform 20, and an open state in which it hangs freely, vertically from the loading platform. In the closed state, the dropside may be fixed to platform strut members (pillars) 50. The dropside 40 is attached along, and may pivot around, an axis A, extending in a lengthwise direction of the dropside 40.

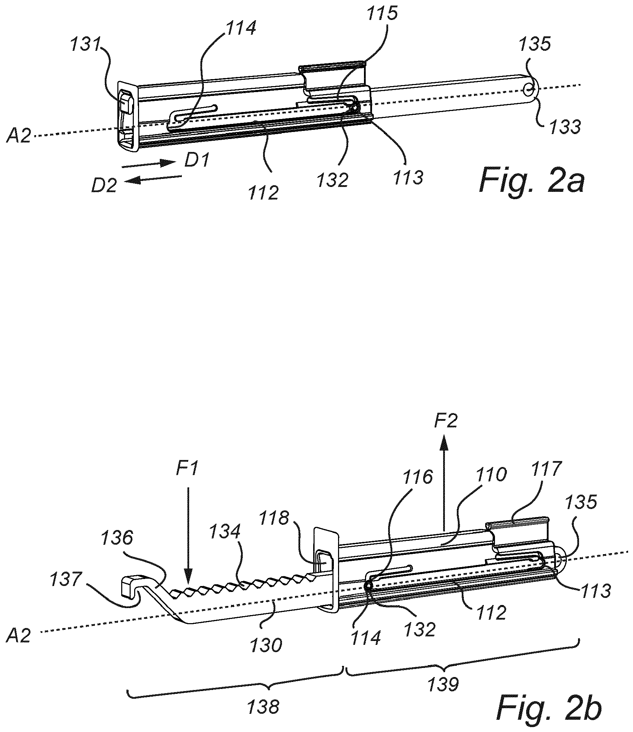

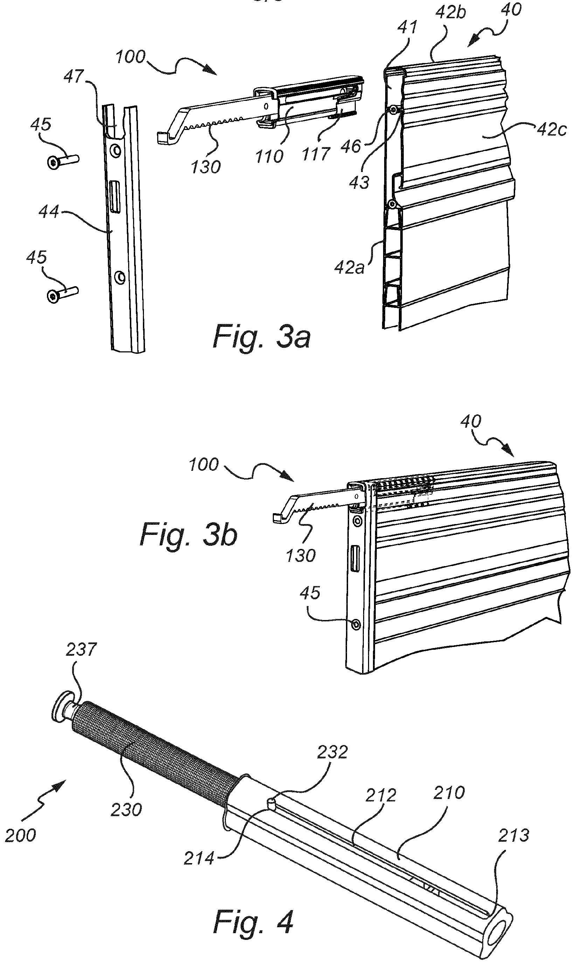

According to embodiments of the present invention, at least one loading platform dropside 40 has a footstep arrangement 100 mounted within an elongated channel 41 (see figure 3a) within the loading platform dropside 40. The footstep arrangement 100 comprise an elongated footstep member 130 arranged to slide within a footstep receiving member 110 (see figure 2a). The footstep receiving member 110 may be elongated. The footstep receiving member may be arranged in the elongated channel 41 within the at least one loading platform dropside 40. As shown in figure 1, the footstep member 130 is extracted to provide an elevated footstep in order to facilitate accessing and/or mounting the loading platform 20. In figure 1, channel 41 receiving the footstep arrangement 100 is located close to the upper edge of the (closed) dropside, but it may be located at any position along its height.

Turning to Figs. 2a - 2b, the footstep arrangement 100 in Fig. 1 is illustrated in more detail, in two different positions.

The footstep arrangement 100 comprises the elongated footstep member 130 slidable within the footstep receiving member 110, in the illustrated example a sleeve 110. The elongated footstep member 130 and the footstep receiving member 110 extend along a longitudinal (lengthwise) axis A2, and the elongated footstep member 130 is slidable along this axis A2. The elongated footstep member 130 is here received coaxially by the footstep receiving member 110. The footstep receiving member 110 has an opening 118 through which the elongated footstep member 130 extends.

The elongated footstep member 130 has a first, retracted position, in which the elongated footstep member 130 is substantially inserted into the footstep receiving member 110 (figure 2a). Here, the outer end 131 of the elongated footstep member 110 may be arranged flush with the footstep receiving member 130 adjacent to the opening 118, when the elongated footstep member 130 is arranged in the retracted position. Accordingly, the whole footstep member 130 is arranged inside the opening 118 when the elongated footstep member 130 is in the retracted position. In the illustrated case, the footstep member is longer than the receiving member, in which case the innermost portion 133 of the footstep member 130 extends beyond the sleeve 110.

The elongated footstep member 130 also has a second, extracted position, in which a part of the elongated footstep member 130 extends outside the footstep receiving member 110 (figure 2b). The portion extending outside the dropside 40 is referred to as a footstep 138 which is coaxial with the footstep receiving member 110. The portion remaining in the footstep receiving member when the footstep member 130 is extracted is labelled 139.

The elongated footstep member 130 may move in a first direction, D1, when moving from the extracted position to the retracted position and in a second direction, D2, opposite to the first direction, D1, when moving from the retracted position to the extracted position. Accordingly, the elongated footstep member 130 has moved in the second direction, D2, when the elongated footstep member 130 has moved from the position illustrated in Fig. 2a to the position in Fig. 2b. The first direction, D1, and second direction, D2, are parallel to the lengthwise extension of the elongated footstep member 130.

The footstep 138 may comprise a plurality of grooves 134, such as a ribbed surface, in order to increase friction to the surface when for example a person is standing on the footstep 138.

A footstep protrusion 136 may protrude in the upward direction forming a stop for the person stepping on the elongated footstep 130 from for example slipping of the elongated footstep member 130.

In the illustrated example, the elongated footstep member 130 comprises a protrusion 132 on at least one side of the elongated footstep member 130 along the extension of the elongated footstep member 130. The protrusion 132 may be a pin or a screw that may be received by a hole of the elongated footstep member 130. In case the protrusion 132 is a screw the hole for receiving the protrusion 132 may be threaded. The hole may be a though hole of the elongated footstep member 130.

The footstep receiving member 110 here further comprises an elongated mating portion 112 (e.g. an elongated slot or groove) for receiving the pin 132. The elongated mating portion 112 may be arranged on a corresponding side of the footstep receiving member 110 with respect to the elongated footstep member 110. The elongated mating portion 112 comprises a first end portion 113 for defining the retracted position, and a second end portion 114 for defining the extracted position. At least one of the first and second end portions 113,114 function as abutments for the pin 132 to limit further movement thereof. In other words, the first end portion 113 may define the retracted position and limit the elongated footstep member 130 from moving further in the first direction, D1. The second end portion may define the extracted position and limit the elongated footstep member 130 from moving further in the second direction, D2.

The elongated footstep member 130 may comprise two protrusions (pins) 132 arranged at opposite sides of the elongated footstep member 130. In this case, the footstep receiving member 110 comprises two elongated slots 112 arranged at opposite sides of the footstep receiving member 110. The opposite sides of the footstep receiving member 110 are be arranged on sides adjacent to the two opposite sides of the elongated footstep member 130. In other words, the opposite sides of the footstep receiving member 110 are arranged at sides along the extension of footstep receiving member 110 transverse to the upper portion of the elongated footstep member 130. The opposite sides of the footstep receiving member 110 and the opposite sides of the elongated footstep member 130 are preferably substantially parallel.

Instead of being received in a mating portion, a pin (not shown) may be arranged in the inner end of the footstep member, e.g. through a hole 135. Such a pin may abut against the footstep receiving portion 110 when the elongated footstep member 130 is in the extracted position.

The footstep receiving member 110 may comprise a first biasing member 115 for engaging with the protrusion 132 when the elongated footstep member 130 is arranged in the retracted position. The first biasing member 115 may lock the elongated footstep member 130 into the retracted position such that the elongated footstep member 130 will not move until a manual force is applied to the elongated footstep member 130 by for example pulling the elongated footstep member 130 in the second direction, D2. The elongated footstep member 130 may comprise at least one of a footstep protrusion 136 and a recess 137. At least one of the footstep protrusion 136 and the recess 137 may be formed as a handle and/or grip facilitating pulling the elongated footstep member 130 such that the elongated footstep member 130 is moved from the retracted position. The elongated footstep member 130 may be reached at the opening 118 when the elongated footstep member 130 is arranged in the retracted position. The protrusion 136 and/or the recess 137 may be arranged adjacent to the opening 118 when the elongated footstep member 130 is arranged in the retracted position. By pulling the elongated footstep member 130 the first biasing member 115 may disengage from the protrusion 132.

The footstep receiving member 110 may comprise a second biasing member 116 for engaging with the protrusion 132 when the elongated footstep member 130 is arranged in the extracted position. The second biasing member 116 may lock the elongated footstep member 130 into the extracted position such that the elongated footstep member 130 will not move until a manual force is applied to the elongated footstep member 130 by for example pushing the elongated footstep member 130 in the first direction, D1. By pushing the elongated footstep member 130 when the elongated footstep member 130 is in the extracted position, the second biasing member 116 may disengage from the protrusion 132.

The first biasing member 115 and/or the second biasing member 116 are optional and not needed but may mitigate unwanted motion of the elongated footstep member 130 caused by any external force, for example gravity or shakings, that may otherwise cause the elongated footstep member 130 to slide from the retracted position and/or the extracted position. External forces due to gravity may for example act partly in at least one of the first direction, D1, and the second direction, D2, when the footstep arrangement 100 is fixedly arranged in a platform dropside 40 and the platform dropside 40 is tilted. This may also occur if the platform dropside 40 is arranged on a vehicle positioned on ground that is inclined. Further, when the elongated footstep member 130 is arranged in the extracted position the second biasing member 116 may cause the elongated footstep member 130 to be more stable when supporting a person's weight by for example preventing the elongated footstep member 116 from sliding back and forth along the first direction, D1, and the second direction, D2. In the extracted position, a sufficient portion of the footstep member 130 remains in the footstep receiving member 110 to prevent the footstep member 130 from rotating with respect to the footstep receiving member 110, also when the receiving member 130 is fixed (e.g. in a dropside channel) and the footstep 138 of the footstep member 130 supports a person's weight. The inner end (remaining portion 139) of the footstep member 130 will serve to counteract any torque applied to the outer end (footstep 138) of the footstep receiving member 110.

Consider a situation where the footstep receiving member 110 is fixedly arranged in a support, such as a channel 41 in a platform dropside 40. The footstep 138 may be subjected to a first force, F1, transverse to the elongation of the elongated footstep member 130 when supporting a person's weight. This causes the elongated footstep member 130 to pivot with respect to the footstep receiving member 110 about a rotational axis adjacent to the opening 118 of the footstep receiving member 110. This will in turn cause the remaining portion 139 to press against the receiving member 110 in an area of contact between the footstep member 130 and the receiving member 110. The footstep receiving member 110 will thus be subject to a second, upward directed force, F2, acting in the area of contact. This second force F2 will be counteracted by the structure in which the receiving member 110 is arranged, e.g. the channel 41.

It is important that the force F2 is not too large, as this may deform or damage the fixated receiving member 110. The size of F2 will depend on F1, but also on the distance between the rotational axis and the area of contact. Accordingly, the distance between the rotational axis and the area of contact must be sufficiently large. This, in turn, means that a sufficient portion of the elongated footstep member 130 must be arranged within the footstep receiving member 110. This will ensure that the receiving member (nor the structure in which the arrangement in mounted) is not deformed, and that the footstep remains parallel with the receiving member.

With increasing portion of the elongated footstep member 130 being arranged within the footstep receiving member 110 the second force F2 may act on an increasing surface area of the footstep receiving member 110 from the elongated footstep member 130. Hence, with increasing portion of the elongated footstep member 130 being arranged within the footstep receiving member 110 the second force F2 may be distributed over an increasing surface area of the footstep receiving member 110 and/or the elongated footstep 130 which in turn may reduce wear and tear of the footstep receiving member 110 and/or the elongated footstep member 130.

Further, the elongated footstep member 130 may be rigid to not deform, such as being bent, due to the first force, F1, applied to the footstep 138. Preferably, the elongated footstep member 130 may be made of metal or any other material suitable to not deform when supporting a person's weight. The elongated footstep member 130 may have any cross-sectional shape, such as round, squared or rectangular. Further, the footstep receiving member 110 may preferably be made of a hard material to resist forces applied thereto from the elongated footstep member 130 when the elongated footstep member 130 support a person's weight. The footstep receiving member may for example be made of metal or plastic or any other material suitable to resist forces applied thereto from the elongated footstep member 130 when it is supporting a person's weight. The footstep receiving member 110 may have a receiving cavity with corresponding size and cross-section as the elongated footstep member 130 in order for the elongated footstep member to fit within the receiving cavity of the footstep receiving member 110. The receiving cavity may be accessed through the opening 118. By for example a rectangular cross-sectional shape of the elongated footstep member 130 as seen in Fig. 2b the elongated footstep member 130 may be formed substantially as a rectangular slab wherein two sides along the extension of the elongated footstep member 130 has smaller width than the other two sides arranged along the extension of the elongated footstep member 130. Hence, by arranging the elongated footstep member such that the first force, F1, i.e. the force from the weight of the person, is applied to one of the sides having a smaller width, an increased stiffness of the elongated footstep member 130 may be achieved.

Turning to Figs. 3a and 3b, illustrating the footstep arrangement 100 identical to the one in Figs. 2a and 2b. Further, Figs. 3a and 3b illustrate a portion of a platform dropside 40 identical to a platform dropside illustrated in Fig. 1. The platform dropside 40 may be typical platform dropside 40 that exist on the market. The footstep arrangement 100 may be fixed in the platform dropside 40. Hence, the footstep arrangement 100 may be retrofitted to an existing platform dropside 40. The platform dropside 40 may be in an open state where the platform dropside 40 is freely hanging in a vertical direction perpendicular to the lengthwise direction. The platform dropside 40 in Figs. 3a and 3b is arranged upside-down with respect to the opened position, similar to the closed position of the platform dropside 40.

The platform dropside 40 comprises an elongated channel 41. The footstep arrangement 100 may be fixedly arranged within the elongated channel 41 of the platform dropside 40. In the Figure, the footstep arrangement 100 is coaxially arranged with the elongated channel 41.

The platform dropside 40 comprises outer walls 42a, 42b, 42c forming at least part of the elongated channel 41. The outer walls 42a, 42b, 42c comprise two outer sidewalls 42a, 42c each covering sides of the platform dropside 40 along the height of the platform dropside 40 in the lengthwise direction. The outer walls 42a, 42b, 42c further comprise a top outer wall 42b covering a side of the platform dropside 40 along a width of the platform dropside 40 in the lengthwise direction. The platform dropside 40 may comprise a plurality of elongated channels 41 each partly formed by the two outer sidewalls 42a, 42c of the platform dropside 40. The platform dropside 40 may further comprise inner walls 43 which connect the two outer sidewalls 42a, 42c. The elongated channel 41 may be formed by at least part of the outer walls 42a, 42b, 42c and at least one of the inner walls 43. The platform dropside 40 is open on at least one side transverse to the lengthwise direction in order to access the elongated channel 41 and to facilitate mounting the footstep arrangement 100 within the elongated channel 41. The inner walls 43 is also accessed by the platform dropside 40 being open. The platform dropside 40 may comprise a cover section 44 arranged to cover the open side of the platform dropside 40 subsequently to arranging the footstep arrangement 100 within the elongated channel 41. The cover section 44 is attached to the platform dropside 40 with fastening means 45, such as screws. The fastening means 45 is attached to receiving portions 46 of the platform dropside 40. The receiving portions 46 may be holes which may be threaded. The cover section 44 may comprise an opening 47 where the elongated footstep member 130 is accessed. The elongated footstep member 130 may move through the opening 47 when sliding within the footstep receiving member 110. When arranging the footstep arrangement 100 on an existing platform dropside 40, the cover section 44 may be removed in order to access the elongated channels 41.

The footstep receiving member 110 may comprise an abutment 117 arranged to be in contact with the elongated channel 41. The abutment 117 may be formed as a wing protruding from the upper portion of the receiving member 110 to abut against at least one of the inner walls 43. The abutment 117 may distribute the second force, F2, to a surface of at least one of the inner walls 43 of the elongated channel 41 when the elongated footstep member 130 supports a person's weight. The footstep receiving member 130 may at least partially enclose the remaining portion 139 of the elongated footstep member 130. The footstep receiving member 130 may comprise an open portion along the extension of the footstep receiving member 130, wherein the open portion faces at least one of the inner walls 43. Further, at least part of the remaining portion 139 of the elongated footstep member 130 may be in direct contact with at least one of the inner walls 43 of the elongated channel 41. The remaining portion 139 of the elongated footstep member 130 may be in direct contact with at least one of the inner walls 43 of the elongated channel 41 when the elongated footstep member 130 supports a person's weight. Accordingly, the second force, F2, may act directly on at least one of the inner walls 43 of the elongated channel 41 by the remaining portion 139 of the elongated footstep member 130 when the elongated footstep member 130 supports a person's weight.

Now turning to Fig. 4 illustrating a footstep arrangement 200 according to another embodiment of the invention. The footstep arrangement 200 in Fig. 4 comprise an elongated footstep member 230 that may slide within the footstep receiving member 210 similar to the footstep arrangement previously discussed. The footstep arrangement 200 may be fixed in for example a platform dropside identical to what has been previously discussed. However, in Fig. 4 the elongated footstep member 230 has a circular cross-section and the footstep receiving member 210 has a corresponding cavity for receiving the elongated footstep member 230. Further, the elongated mating portion 212 in Fig. 4 may be arranged on an upper side of the footstep receiving member 210. The elongated footstep member 230 may comprise a protrusion 232 for being received by the elongated mating portion 212 of the footstep receiving member 210. The protrusion 232 may be identical to the protrusion previously discussed to Figs. 2a - 2b, except that the protrusion 232 may be arranged on an upper side of the elongated footstep member 230, wherein the upper side of the elongated footstep member 230 comprises the upper portion for receiving a person's weight. The elongated mating portion 212 may comprise a first end portion 213 and a second end portion 214 which each function as abutments for the protrusion 232 to limit further movement thereof, similar to what has been discussed to Figs 2a - 2b. The elongated footstep member 230 may comprise a recess 237. The recess 237 may be identical to, and/or may provide the same benefits as, the recess 137 discussed to Fig. 2b. However, the recess 237 may be arranged differently, as for example seen in the Figure, the recess 237 may encircle the elongated footstep member, such that the elongated footstep member 230 may have a smaller radius at the recess 237 compared to the remaining elongated footstep member 230. However, it should be understood that the recess 237 may be arranged adjacent to an opening, corresponding to the opening 118 in Fig. 2b, through which the elongated footstep member 230 may slide when the elongated footstep member 230 is arranged in the retracted position.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A loading platform dropside (40) extending in a lengthwise direction and comprising an elongated channel (41) extending in said lengthwise direction, said platform dropside being configured to form part of a loading platform sidewall (30), and when in use having a closed state in which the loading platform dropside delimits a loading platform (20) and an open state in which the platform dropside is freely hanging in a vertical direction perpendicular to said lengthwise direction, said loading platform dropside comprising a footstep arrangement (100) including:
a footstep receiving member (110) rotationally fixedly arranged in said elongated channel (41), said footstep receiving member extending along a longitudinal axis;
an elongated footstep member (130) arranged to be received coaxially within said footstep receiving member, and to be slidable along said longitudinal axis;
wherein said elongated footstep member (130) has:
a first, retracted position, in which the elongated footstep member is substantially inserted into the footstep receiving member, and
a second, extracted position, in which a part of the elongated footstep member extends outside the footstep receiving member, thereby forming a footstep coaxial with the footstep receiving member,
wherein, in the extracted position, a sufficient portion of the elongated footstep member remains in the footstep receiving member, such that the elongated footstep is capable of supporting a person's weight without rotating with respect to the footstep receiving member.

2. The loading platform dropside according to claim 1, wherein at least 20%, preferably at least 30%, more preferably at least 40%, most preferably at least 50% of the elongated footstep member remains in the footstep receiving member when said elongated footstep member is arranged in said extracted position.

3. The loading platform dropside according to any one of claims 1 - 2, wherein the elongated footstep member comprises a protrusion (132) configured to abut against said footstep receiving member in at least one of the extracted position and the retracted position.

4. The loading platform dropside according to claim 3, wherein the footstep receiving member comprises an elongated mating portion (112) for receiving said protrusion and wherein said elongated mating portion comprises a first end portion (113) for defining said retracted position and a second end portion (114) for defining said extracted position.

5. The loading platform dropside according to anyone of claims 3-4, wherein said footstep receiving member comprises a first biasing member (115) for engaging with said protrusion when said elongated footstep member is arranged in said retracted position.

6. The loading platform dropside according to any one of claims 3-5, wherein said footstep receiving member comprises a second biasing member (116) for engaging with said protrusion when said elongated footstep member is arranged in said extracted position.

7. The loading platform dropside according to any one of the preceding claims wherein the elongated footstep member is made of metal and said footstep receiving member is made of a plastic material.

8. The loading platform dropside according to any one of the preceding claims wherein the elongated footstep member comprises a plurality of grooves (134).

9. The loading platform dropside according to any one of the preceding claims wherein the footstep receiving member comprises an opening through which the elongated footstep member slides and at which the elongated footstep member is reached when said elongated footstep member is arranged in said retracted position and wherein the elongated footstep member comprises a recess (137) arranged adjacent to said opening when said elongated footstep member is arranged in said retracted position.

10. The loading platform dropside according to claim 1, wherein said loading platform dropside is configured to pivot around an axis A extending in said lengthwise direction and wherein said footstep arrangement is arranged in the opposite end of the loading platform dropside with respect to said axis A.

## Patentansprüche

1. Ladeflächen-Klappbordwand (40), die sich in einer Längsrichtung erstreckt und einen länglichen Kanal (41) umfasst, der sich in der Längsrichtung erstreckt, wobei die Ladeflächen-Klappbordwand dafür konfiguriert ist, einen Teil einer Ladeflächen-Seitenwand (30) zu bilden, und, wenn sie in Gebrauch ist, einen geschlossenen Zustand, in dem die Ladeflächen-Klappbordwand eine Ladefläche (20) begrenzt, und einen offenen Zustand, in dem die Flächen-Klappbordwand frei in einer vertikalen Richtung, senkrecht zu der Längsrichtung, hängt, aufweist, wobei die Ladeflächen-Klappbordwand eine Trittstufenanordnung (100) umfasst, die Folgendes einschließt:
ein Trittstufen-Aufnahmeelement (110), das drehfest in dem länglichen Kanal (41) angeordnet ist, wobei sich das Trittstufen-Aufnahmeelement entlang einer Längsachse erstreckt,
ein längliches Trittstufenelement (130), das dafür angeordnet ist, koaxial innerhalb des Trittstufen-Aufnahmeelements angeordnet zu sein und entlang der Längsachse verschiebbar zu sein,
wobei das längliche Trittstufenelement (130) Folgendes aufweist:
eine erste, eingezogene Position, in der das längliche Trittstufenelement im Wesentlichen in das Trittstufen-Aufnahmeelement eingefügt ist, und
eine zweite, ausgezogene Position, in der sich ein Teil des länglichen Trittstufenelements außerhalb des Trittstufen-Aufnahmeelements erstreckt, wodurch eine Trittstufe, koaxial mit dem Trittstufen-Aufnahmeelement, gebildet wird,
wobei, in der ausgezogenen Stellung, ein ausreichender Anteil des länglichen Trittstufenelements in dem Trittstufen-Aufnahmeelement verbleibt, so dass die längliche Trittstufe dazu in der Lage ist, das Gewicht einer Person zu tragen, ohne sich in Bezug auf das Trittstufen-Aufnahmeelement zu drehen.

2. Ladeflächen-Klappbordwand nach Anspruch 1, wobei mindestens 20 %, vorzugsweise mindestens 30 %, bevorzugter mindestens 40 %, am bevorzugtesten mindestens 50 % des länglichen Trittstufenelements in dem Trittstufen-Aufnahmeelement verbleibt, wenn das längliche Trittstufenelement in der ausgezogenen Position angeordnet ist.

3. Ladeflächen-Klappbordwand nach einem der Ansprüche 1 bis 2, wobei das längliche Trittstufenelement einen Vorsprung (132) umfasst, der dafür konfiguriert ist, in mindestens einer von der ausgezogenen Position und der eingezogenen Position an das Trittstufen-Ausnahmeelement anzustoßen.

4. Ladeflächen-Klappbordwand nach Anspruch 3, wobei das Trittstufen-Aufnahmeelement einen länglichen Passabschnitt (112) zum Aufnehmen des Vorsprungs umfasst und wobei der längliche Passabschnitt einen ersten Endabschnitt (113) zum Definieren der eingezogenen Position und einen zweiten Endabschnitt (114) zum Definieren der ausgezogenen Position umfasst.

5. Ladeflächen-Klappbordwand nach einem der Ansprüche 3 bis 4, wobei das Trittstufen-Aufnahmeelement ein erstes Vorspannelement (115) zum Ineinandergreifen mit dem Vorsprung, wenn das längliche Trittstufenelement in der eingezogenen Position angeordnet ist, umfasst.

6. Ladeflächen-Klappbordwand nach einem der Ansprüche 3 bis 5, wobei das Trittstufen-Aufnahmeelement ein zweites Vorspannelement (116) zum Ineinandergreifen mit dem Vorsprung, wenn das längliche Trittstufenelement in der ausgezogenen Position angeordnet ist, umfasst.

7. Ladeflächen-Klappbordwand nach einem der vorhergehenden Ansprüche, wobei das längliche Trittstufenelement aus Metall hergestellt ist und das Trittstufen-Aufnahmeelement aus einem Kunststoffmaterial hergestellt ist.

8. Ladeflächen-Klappbordwand nach einem der vorhergehenden Ansprüche, wobei das längliche Trittstufenelement eine Vielzahl von Rillen (134) umfasst.

9. Ladeflächen-Klappbordwand nach einem der vorhergehenden Ansprüche, wobei das Trittstufen-Aufnahmeelement eine Öffnung umfasst, durch die das längliche Trittstufenelement gleitet und bei der das längliche Trittstufenelement ergriffen wird, wenn das längliche Trittstufenelement in der eingezogenen Position angeordnet ist, und wobei das längliche Trittstufenelement eine Aussparung (137) umfasst, die angrenzend an die Öffnung angeordnet ist, wenn das längliche Trittstufenelement in der eingezogenen Position angeordnet ist.

10. Ladeflächen-Klappbordwand nach Anspruch 1, wobei die Ladeflächen-Klappbordwand dafür konfiguriert ist, um eine Achse A zu schwenken, die sich in der Längsrichtung erstreckt, und wobei die Trittstufenanordnung in dem entgegengesetzten Ende der Ladeflächen-Klappbordwand in Bezug auf die Achse A angeordnet ist.

## Revendications

1. Ridelle basculante pour plate-forme de chargement (40) s'étendant dans le sens de la longueur et comprenant un canal allongé (41) s'étendant dans ledit sens de la longueur, ladite ridelle de plate-forme étant configurée pour former une partie intégrante d'une paroi latérale de plate-forme de chargement (30) et, lorsqu'elle est utilisée dans un état fermé dans lequel la ridelle basculante pour plate-forme de chargement délimite une plate-forme de chargement (20) et dans un état ouvert dans lequel la ridelle basculante pour plate-forme est suspendue librement dans un sens vertical perpendiculaire audit sent de la longueur, ladite ridelle basculante pour plate-forme de chargement comprend un système de marchepied (100) incluant :
un élément récepteur de marchepied (110) fixé de manière à pouvoir tourner et disposé dans ledit canal allongé (41), ledit élément de réception de marchepied s'étendant le long d'un axe longitudinal ;
un élément de marchepied allongé (130) conçu pour être reçu coaxialement dans ledit élément récepteur de marchepied, et pour pouvoir coulisser le long dudit axe longitudinal ;
ledit élément de marchepied allongé (130) ayant :
une première position rétractée dans laquelle l'élément de marchepied allongé est sensiblement inséré dans l'élément récepteur de marchepied, et
une seconde position extraite dans laquelle une partie de l'élément de marchepied allongé s'étend à l'extérieur de l'élément récepteur de marchepied, en formant ainsi un marchepied coaxial à l'élément récepteur de marchepied,
sachant que, dans la position extraite, une partie suffisante de l'élément de marchepied allongé reste dans l'élément récepteur de marchepied, de sorte que le marchepied allongé est capable de supporter le poids d'une personne sans tourner par rapport à l'élément récepteur de marchepied.

2. Ridelle basculante pour plate-forme de chargement selon la revendication 1, dans lequel au moins 20 %, de préférence au moins 30 %, plus préférentiellement au moins 40 %, le plus préférentiellement au moins 50 %, de l'élément de marchepied allongé reste dans l'élément récepteur de marchepied lorsque ledit élément de marchepied allongé est disposé dans ladite position rétractée.

3. Ridelle basculante pour plate-forme de chargement selon l'une quelconque des revendications 1 à 2, dans laquelle l'élément de marchepied allongé comprend une saillie (132) configurée pour buter contre un élément récepteur de marchepied dans au moins une parmi la position extraite et la position rétractée.

4. Ridelle basculante pour plate-forme de chargement selon la revendication 3, dans laquelle l'élément récepteur de marchepied comprend une section correspondante allongée (112) destinée à recevoir ladite saillie et ladite section correspondante allongée comprend une première section terminale (113) pour définir ladite section rétractée et une seconde section terminale (114) pour définir ladite position extraite.

5. Ridelle basculante pour plate-forme de chargement selon l'une quelconque des revendications 3 à 4, dans laquelle ledit élément récepteur de marchepied comprend un premier élément d'inclinaison (115) destiné à s'engager dans ladite saillie lorsque ledit élément de marchepied allongé est disposé dans ladite position rétractée.

6. Ridelle basculante pour plate-forme de chargement selon l'une quelconque des revendications 3 à 5, dans laquelle ledit élément récepteur de marchepied comprend un second élément d'inclinaison (116) destiné à s'engager dans ladite saillie lorsque ledit élément de marchepied allongé est disposé dans ladite position extraite.

7. Ridelle basculante pour plate-forme de chargement selon l'une quelconque des revendications précédentes, dans laquelle l'élément de marchepied allongé est composé de métal et ledit élément récepteur de marchepied est composé de matière plastique.

8. Ridelle basculante pour plate-forme de chargement selon l'une quelconque des revendications précédentes, dans laquelle l'élément de marchepied allongé comprend une pluralité de gorges (134).

9. Ridelle basculante pour plate-forme de chargement selon l'une quelconque des revendications précédentes, dans laquelle l'élément récepteur de marchepied comprend une ouverture à travers laquelle l'élément de marchepied allongé coulisse et au niveau de laquelle l'élément de marchepied allongé est atteint lorsque ledit élément de marchepied allongé est disposé dans ladite position rétractée et l'élément de marchepied allongé comprend un retrait (137) disposé adjacent à ladite ouverture lorsque ledit élément de marchepied allongé est disposé dans ladite position rétractée.

10. Ridelle basculante pour plate-forme de chargement selon la revendication 1, dans laquelle ladite ridelle basculante pour plate-forme de chargement est configurée pour pivoter autour d'un axe A s'étendant dans ledit sens de la longueur et ledit système de marchepied est disposé à l'extrémité opposée de la ridelle basculante pour plate-forme de chargement par rapport audit axe A.
